# EUROPEAN PATENT SPECIFICATION

(11) **EP 4 530 100 B1**
(45) Date of publication and mention of the grant of the patent: **03.06.2026**
(21) Application number: 24202924.7
(22) Date of filing: 26.09.2024
(51) Int. Cl.: B60C 23/04, B29D 30/00

(54) **TIRE WITH ATTACHED COMPONENT AND SENSOR CONTAINER ASSEMBLY**
REIFEN MIT DARAN BEFESTIGTER KOMPONENTE UND SENSORBEHÄLTERANORDNUNG
PNEU AVEC COMPOSANT ATTACHÉ ET ENSEMBLE RÉCIPIENT DE CAPTEUR

(30) Priority: 29.09.2023 US 202363586494 P; 05.08.2024 US 202418794254
(43) Date of publication of application: 02.04.2025
(73) Proprietor: The Goodyear Tire & Rubber Company, Akron, OH 44316 (US)
(72) Inventor: MARTINS AMARAL, Thiago, 9054 Ettelbruck (LU); HILGER, Stephan Peter, 4770 Medell (BE); SALVO, Thomas, 6637 Fauvillers (BE); GRIFFOIN, Jean-Claude Patrice Philippe, 9170 Mertzig (LU); HUSSAIN, Izhar, 7651 Heffingen (LU); DEBOUT, Benoit Julien A., 6600 Bastogne (BE); TAHON, Julia Martine Francoise Claudine, 7596 Reckange (LU); BOCK, Christian, 54456 Tawern (DE); MIDDELBERG, Jason Mark, 7450 Lintgen (LU)
(74) Representative: Kutsch, Bernd

(56) References cited:
- WO-A1-2022/181442
- DE-A1- 10 255 138
- US-A1- 2021 370 728
- LASERAX: "Laser Texturing", 21 June 2020 (2020-06-21), XP002812972, Retrieved from the Internet <URL:https://web.archive.org/web/20200621050154/https://www.laserax.com/laser-texturing> [retrieved on 20250207]

## Description

### Field of the Invention

The present invention is directed to a tire comprising a component, such as a sensor container, attached to an inner surface, e.g., of an innerliner, of the tire. The invention is also directed to a sensor container, or sensor container assembly comprising a sensor container and a sensor, particularly a tire pressure sensor. Furthermore, the invention is directed to a method of attaching a component, such as a sensor container, to an inner surface of the tire.

### Background of the Invention

Some modern tires comprise additional components, such as post-cure added components, which are attached to the tire after curing. For instance, some pneumatic tire types comprise an additional sensor which is attached to an inner surface of the tire in the tire cavity. To keep such a sensor in its position over tire life, it has to be reliably attached to the inner surface of the tire. While some methods of attaching components and/or sensors to an inner surface of the tire may be known in the art, significant room for improvement of durable attachment remains, particularly for use in high-speed applications.

WO 2022/181442 A1 describes a tire having an inner surface comprising an elastomer composition. A mounting member having an attachment surface comprising a polymer composition may be attached to a portion of the inner surface via an adhesive. The attachment surface may be polished or irradiated by laser light before attaching it to the inner surface.

US 2021/370728 A1 describes a pneumatic tire having a tire inner surface and at least one housing body made of rubber and configured to accommodate a sensor unit including a sensor for acquiring tire information. The housing body includes an opening portion through which the sensor unit is inserted and is vulcanization-bonded to the tire inner surface. A further tire with a housing body attached to a tire inner surface is also known from DE 102 55 138 A1.

The laser texturing of surfaces is explained on www.laserax.com/laser-texturing.

### Summary of the Invention

The invention relates to a tire in accordance with claim 1, to a sensor container assembly in accordance with claim 6, and to a method in accordance with claim 7.

Dependent claims refer to preferred embodiments of the invention.

In a first preferred aspect of the present invention, the invention is directed to a tire having an inner surface comprising an elastomer composition and partially enclosing a tire cavity, wherein the tire further comprises a component having an attachment surface comprising a polymer composition, which is attached to a portion of the inner surface via an adhesive. The attachment surface comprises a surface pattern comprising elevations having a height within a range of 20 µm to 1000 µm.

In a second preferred aspect of the present invention, the invention is directed to a method of attaching a component to a portion of an inner surface of a tire. The method comprises steps of providing a tire comprising an inner surface partially enclosing a tire cavity; providing a component having an attachment surface comprising a polymer composition and having a surface pattern formed on the attachment surface; applying an adhesive onto one or more of the attachment surface and the portion of the inner surface; and attaching the component with its attachment surface onto the portion of the inner surface.

In a third preferred aspect of the present invention, the invention is directed to a sensor container assembly for a tire, comprising a sensor container having an attachment surface comprising an elastomer composition, wherein the attachment surface comprises a surface pattern comprising a plurality of elevations having a height within a range of from 20 µm to 1000 µm. Furthermore, the sensor container assembly comprises a tire pressure sensor carried by the sensor container.

The surface pattern comprises elevations in the form of ribs having a height within a range of 20 µm to 1000 µm; and wherein the portion of the inner surface optionally comprises another surface pattern comprising elevations comprising one or more of i) a height within a range of 20 µm to 500 µm, and ii) one or more of posts, ribs, cones, and pyramids.

### Brief Description of the Drawings

The invention will be described by way of example and with reference to the accompanying drawings in which:
FIG. 1 is a schematic cross-section of a tire including a sensor container carrying a sensor in accordance with an embodiment of the present invention;
FIG. 2 is a magnified schematic cross-section of the sensor container with a mounted sensor shown already in Figure 1;
FIG. 3 is a schematic planar view of the bottom of the sensor container shown in Figure 2;
FIG. 4 is a schematic cross-section of another embodiment of a sensor container having triangular elevations on its attachment surface;
FIG. 5 is a schematic cross-section of yet another embodiment of a sensor container having a plurality of posts on its attachment surface;
FIG. 6 is a schematic cross-section of a comparative sensor container attached with an adhesive to a tire innerliner without elevations on its attachment surface; and
FIG. 7 is a schematic cross-section of the sensor container shown already in Figures 1, 2, and 3, which is attached to the innerliner, wherein spaces between elevations on the attachment surface are filled with adhesive to bond the sensor container to the innerliner.

### Detailed Description of Preferred Embodiments of the Invention

According to said first preferred aspect, the invention is directed to a tire having an inner surface (such as formed by an innerliner of the tire) comprising or formed by an elastomer composition, preferably a rubber composition, and partially enclosing a tire cavity. The tire further comprises a component (or, in other words, an appliance) having an attachment surface comprising or formed by a polymer composition, preferably an elastomer composition, or particularly a rubber composition, which is attached to a portion of the inner surface via or by an adhesive. The attachment surface comprises a surface pattern comprising elevations having a height within a range of 20 µm to 1000 µm, preferably within a range of 30 µm to 500 µm, or more preferably within a range of 30 µm to 200 µm, or even more preferably within a range of 50 µm and 150 µm. For instance, such a surface pattern helps to ensure that adhesive is not completely displaced from large areas of the attachment surface during mounting of the component to the inner surface. In particular, in the absence of such elevations it may happen that adhesive is unevenly distributed by being displaced in areas of the surface potentially resulting in an impaired adhesion of the component to the inner surface. Moreover, providing such a surface pattern supports a provision of a more regular adhesive layer between the inner surface and the component. In addition, the pattern increases the total surface area covered with the adhesive.

A majority of the elevations comprise ribs. Optionally, posts may have various cross-sectional shapes, including but not limited to circular, elliptical, polygonal, rectangular, triangular, and other cross-sectional shapes (in a plane in parallel to the attachment surface). Ribs may also be considered as elongated ribs extending along the attachment surface. Ribs may have various cross-sectional shapes, particularly in a plane perpendicular to their elongated shape, such as including rectangular shapes, triangular shapes, curved shapes, half-circular shapes, and other cross-sectional shapes. Ribs may extend over the full width of the attachment surface and/or only along portions of the attachment surface. Multiple ribs are arranged behind one another (e.g., spaced apart from one another) in a line. Ribs may optionally extend in one or more of kinked shapes, curved shapes, undulated shapes, and zigzag shaped along the attachment surface. Pyramids may, e.g., comprise one or more of polygonal base shapes, rectangular base shapes, triangular base shapes, and other base shapes. Optionally, the term surface pattern can also be understood as surface texture.

In another embodiment, the attachment surface comprises at least 10, preferably at least 20, or even more preferably at least 50 of the elevations, or at least 100 of the elevations.

A majority of the elevations are ribs extending in parallel to one another. Ribs may extend over the entire width of the attachment surface or only a portion thereof. In one embodiment a majority of the ribs extends over at least 90% of the width of the attachment surface which can be measured at the position of each rib, or along the length of each rib, respectively. Ribs can be relatively fast and/or reliably manufactured and can provide a robust basis for attaching the component to the inner surface. Moreover, neighboring, parallel ribs form a channel between them which allows flow of adhesive in parallel to the ribs along the attachment surface. Excess adhesive may exit the interface between the attachment surface and the portion of the inner surface via such channels. This helps to provide a more uniform and/or regular adhesive thickness at the interface between the component and the inner surface.

In another embodiment, the attachment surface is one or more of essentially circular, flat, and planar. In addition, or alternatively, the portion of the inner surface is one or more of essentially circular, flat, and planar.

In still another embodiment, the ribs have one or more of a width (or diameter) within a range of 30 µm and 800 µm, preferably 30 µm to 600 µm, or even 50 µm to 600 µm. Such a (maximum) width of a rib is measured perpendicular to its extension. Preferably, ribs do not cross and/or contact each other. Widths and/or diameters may vary, e.g., within such ranges.

With regard to height ranges mentioned herein, it is remarked that minimum heights shall not exclude typical surface roughness. Optionally, the attachment surface and/or a portion of the inner surface may also comprise protrusions having a height smaller than 20 µm but the pattern at least has elevations within one of the above-mentioned ranges.

In still another embodiment, the attachment surface is free of elevations having a height larger than 1000 µm, larger than 500 µm, larger than 200 µm, or larger than 150 µm.

In still another embodiment, neighboring ribs have a distance within a range of 30 µm and 800 µm, preferably 30 µm to 600 µm, or 50 µm to 600 µm. The distances can vary, e.g., within such ranges. Distances, or in other words lateral distances, between neighboring elevations are measured as the shortest line between these elevations.

In still another embodiment, the (lateral) distance between a center of a top of a rib and a center of a top of a neighboring rib is within a range of 60 µm to 1600 µm, preferably within a range of 60 µm to 1200 µm, or 100 µm to 1200 µm.

In still another embodiment, said portion of the inner surface comprises another surface pattern. Such a further surface pattern may be chosen and/or dimensioned as mentioned in the embodiments herein above in relation to the surface pattern of the attachment surface. The pattern of the portion of the inner surface may be the same or different as the pattern of the attachment surface.

In still another embodiment, the pattern is a regular pattern, optionally with one or more repeating distances between neighboring elevations.

In still another embodiment, the portion of the inner surface may have an essentially circular shape and/or have an area which is at least the same as, or at least 5% larger, or even at least 20% larger than the area of the attachment surface. In particular, the portion of the inner surface may have the further surface pattern or texture. In addition, or alternatively, the attachment surface may also have a circular shape. Optionally, the circular portion of the inner surface may have a diameter which is larger than the diameter of the circular attachment portion, preferably within 1% to 20% larger. Optionally said portion is cleaned, such as laser cleaned, e.g., before forming the surface pattern on the portion of the inner surface.

In still another embodiment, space between the elevations is at least predominantly filled with the adhesive. The adhesive may be considered as a part of the tire.

In still another embodiment, the surface pattern is open along at least one direction in parallel to the attachment surface. In other words, the pattern is laterally open to at least one side. In particular, in such an embodiment, adhesive (when still in a liquid state) can flow along the attachment surface between the elevations. In particular, such elevations do not block such a flow in all directions in parallel to the surface. If the pattern is laterally closed / barred, or in other words not open in parallel to the attachment surface, adhesive may still be present within the space between the elevations but might flow and/or distribute less effectively. In addition, or alternatively, the surface pattern comprises passageways between the elevations allowing fluid flow between a first lateral side of the surface pattern and a second lateral side of the surface pattern (which is laterally opposite to the first lateral side of the surface pattern).

In still another embodiment, the tire comprises an innerliner (which can typically be described as a gas barrier layer comprising or consisting of a rubber composition, e.g., comprising butyl rubber and filler material) wherein the portion of the inner surface is a portion of a surface of the innerliner, particularly facing the tire cavity.

In still another embodiment, said component is one or more of a container; a sensor; a sensor container; a container comprising a sensor (which may also be considered as a sensor container assembly); comprising or made of an elastomer composition; comprising or made of a rubber composition; comprising or made of a sulfur-cured rubber composition, a container comprising the attachment surface. Optionally, a container could also be an RFID tag comprising the attachment surface. Optionally, a sensor can at least partially be encapsulated in the polymer composition and/or has the attachment surface formed by the polymer composition.

In still another embodiment, the tire is one of a passenger car tire, a motorcycle tire, a truck tire, an aircraft tire, an agricultural, a racing tire (e.g., one of a slick tire and a semi-slick tire), and an off-the-road tire.

In still another embodiment, said adhesive is selected from one or more of a cyano-acrylate adhesive, a solvent based adhesive, an epoxy adhesive, an isocyanate adhesive, a silicone adhesive, a polyurethane adhesive, and a pressure sensitive adhesive. An adhesive may also be applied in multiple layers, such as by means of a double-sided adhesive tape. The use of an adhesive tape is also covered by the terms attached via, with or by an adhesive, or applying an adhesive.

In yet another embodiment, the tire is a pneumatic tire, preferably a pneumatic passenger car or truck tire.

In still another embodiment, an elastomer composition (such as a rubber composition) comprises one or more of one or more rubbers (such as comprising one or more of natural rubber, synthetic polyisoprene, butadiene rubber, styrene-butadiene rubber, butyl rubber), a filler (such as comprising one or more of carbon black and silica), one or more resins (such as one or more hydrocarbon resins comprising one or more of coumarone-indene resin, petroleum hydrocarbon resin, terpene resin, styrene/alphamethylstyrene resin, terpene phenol resin, rosin derived resin and copolymers and/or mixtures thereof), one or more accelerators, one or more antidegradants, one or more oils, one or more liquid diene based polymers, one or more coupling agents (such as carbon black coupling agents and/or silanes), one or more sulfur donors, and sulfur or one or more sulfur compositions. The composition may be a sulfur-curable or sulfur cured rubber composition. For instance, the inner surface and/or the attachment surface may comprise, be formed of, and/or consist of such a composition. Optionally, the container comprises and/or consists of such a composition. Optionally, elastomer compositions, such as rubber compositions may be cord and/or fiber reinforced.

In still another embodiment, an elastomer composition comprises and/or is based on a thermoplastic elastomer, such as a thermoplastic polyester elastomer. Optionally, one or more of the attachment surface, the component, the container, and the sensor container comprise, is formed of, or consists of such a composition.

In still another embodiment, a polymer composition is chosen from an elastomer composition (e.g., as mentioned herein above) and a polyurethane based composition.

In the second preferred aspect, the invention is directed to a method of attaching a component (or, in other words, an appliance) to a portion of an inner surface of a tire. For instance, the tire may be the tire in accordance with the first aspect and/or one or more of its embodiments, or other embodiments disclosed herein. The method comprises steps of: providing a tire, preferably a cured tire, comprising an inner surface such as the surface of a, preferably cured, innerliner, at least partially enclosing a tire cavity; providing a component, such as a container or sensor, having an attachment surface comprising a polymer composition and having a surface pattern formed on the attachment surface; applying an adhesive onto one or more of the attachment surface and the portion of the inner surface; and attaching the component with its attachment surface onto the portion of the inner surface.

In one embodiment, the step of providing a tire comprises providing a cured tire.

In another embodiment, the method further comprises the step of forming or manufacturing the surface pattern on the attachment surface by one or more of molding (such as injection molding), additive manufacturing (such as one or more of 3D-printing, chemical deposition, and vapor deposition; wherein added material is preferably the same as the material of the attachment surface), subtractive manufacturing (such as one or more of laser engraving, chemical removal, e.g., etching, and abrasive, mechanical techniques). Said additive and/or subtractive manufacturing is also preferred when providing a surface pattern on the portion of the inner surface of the tire. Laser engraving or ablation is particularly preferred.

In still another embodiment, the component is a container comprising the elastomer composition, preferably a rubber composition, wherein the surface pattern is optionally formed when molding the container. Alternatively, the attachment surface may be part of a layer attached and/or bonded to such a container. The layer may be molded, including the surface pattern.

In still another embodiment, the surface pattern is formed by subtractive manufacturing, which is a preferred method herein.

In still another embodiment, the surface pattern is formed by laser engraving / ablation.

In still another embodiment, the method further comprises the step of cleaning one or more of the attachment surface and the portion of the inner surface before attaching the component. Preferably, such a cleaning step involves laser cleaning. Preferably, the cleaning step is carried out before the step of forming the surface pattern on the respective surface. Other cleaning options include, e.g., solvent cleaning. In another option, a removable foil is provided on the inner surface (e.g., the innerliner's surface) before curing the tire and which can be peeled after curing to provide a relatively clean surface.

In still another embodiment, the component is a sensor container and the method optionally further comprises the step of mounting the sensor in the sensor container. Preferably, the sensor container is attached with its attachment surface onto the portion of the inner surface together with the mounted sensor. In other words, the sensor is optionally mounted in a first step into the sensor container and the sensor container is attached to the portion of the inner surface with the mounted sensor in a second step. Optionally, the sensor container is applied onto the inner surface by a robotic device, e.g., pushing the sensor container essentially perpendicularly onto the portion of the inner surface. Preferably, the sensor is in a lateral center area or portion of the sensor container and, optionally, the robotic device pushes onto the sensor container in an area laterally besides, optionally concentrically around, the sensor so as to attach the sensor container to the portion of the inner surface.

In still another embodiment, the surface pattern comprises elevations comprising one or more of: a height within a range of 20 µm to 1000 µm; and one or more of posts, ribs, and pyramids. It is noted that very high elevations (measured perpendicular to a plane of the attachment surface) are less desirable as adhesive collected between these elevations may be too thick, which may result in a high consumption of adhesive and/or might even impair the bonding strength as very thick adhesive layers, such as based on cyano-acrylate adhesive may tend to be brittle. Very small elevations may also be less desirable as the adhesive layer collected between the elevations may be very thin and/or the ability of the adhesive to flow parallel to the attachment surface may be limited.

In still another embodiment, the portion of the inner surface comprises another surface pattern comprising elevations comprising one or more of: a height within a range of 20 µm to 500 µm; and one or more of posts, ribs, cones, and pyramids. With regard to the portion of the inner surface, elevations with larger height may also be less desirable, particularly when obtained with a subtractive method. Exaggerated removal of material at the inner surface (e.g., innerliner material) may impair the air barrier properties of the tire's inner surface.

According to the third aspect, the invention is directed to a sensor container assembly for a tire. The assembly comprises i) a sensor container having an attachment surface comprising and/or consisting of an elastomer composition (such as a rubber composition), wherein the attachment surface comprises a surface pattern comprising a plurality of elevations having a height within a range of 20 µm to 1000 µm. Furthermore, the sensor container comprises a tire pressure sensor carried by the sensor container.

In one embodiment, the sensor container comprises a hollow space for receiving and/or carrying the sensor.

In another embodiment, said space is one of an essentially hollow cylindrical space, and a frustoconical space.

In still another embodiment, said space is laterally in a center of the sensor container.

In another embodiment, the sensor has a flange portion for holding the sensor in position, such as in said space and/or via a form fit.

In still another embodiment, the sensor is removable or separatable from the container by deformation of the, preferably flexible, flange portion. Preferably, the flange portion is made of an elastomer composition, preferably a rubber composition.

In still another embodiment, the pressure sensor is adapted to measure pressure and optionally one or more of temperature, and acceleration.

In still another embodiment, the pressure sensor may involve an energy source (e.g., one or more of a battery, an energy harvesting device, and an electromagnetic energy receiver), a processor, and a memory.

In still another embodiment, the sensor container has a bottom portion having the attachment surface, and wherein said space is optionally provided opposite to the attachment surface. Optionally, the bottom portion supports the sensor, such as a bottom of the sensor.

In still another embodiment, the attachment surface has one of a circular shape and an elliptical shape.

In still another embodiment, the sensor container is an RFID tag.

In a fourth aspect, the present invention is directed to a sensor container comprising or consisting of an elastomer composition comprising a bottom portion with an attachment surface to be attached to an inner surface of a tire. The attachment surface comprises a plurality of elevations having a height within a range of 20 µm to 1000 µm. Moreover, the sensor container comprises one or more of an essentially hollow cylindrical space, and a frustoconical space for receiving a cylindrically shaped sensor, such as a cylindrically shaped tire pressure sensor.

Optionally, said space comprises an, e.g., flexible, flange portion at a top portion of the sensor container which is opposite to the bottom portion of the container and/or opposite to the attachment surface. Preferably, the bottom portion supports a bottom of the sensor.

It is emphasized that the features and/or embodiments of the above aspects may be combined with one another. The same applies to the features and/or embodiments mentioned herein below.

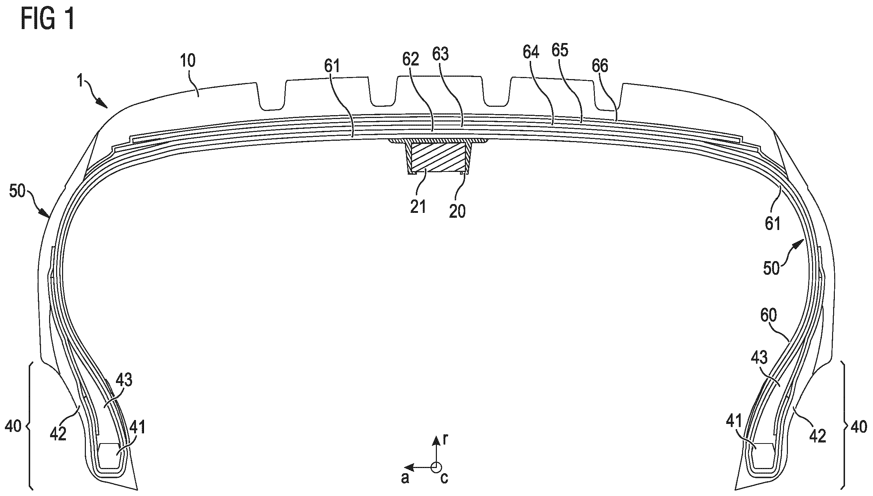

Figure 1 shows a schematic cross-section of a tire 1 in accordance with an embodiment of the present invention. The tire 1 comprises a tread portion 10, two sidewalls 50, and two bead portions 40 each comprising a bead 41, an apex 43 and a chafer 42. Furthermore, the tire 1 comprises an innerliner 61 forming an inner surface 60 of the tire 1 and partially enclosing the tire cavity. The tire 1 also comprises two carcass plies 62, 63 which are folded around each bead 41, as well as two belt plies 64, 65, and an overlay 66 covering the belt plies 64, 65.

In accordance with the present embodiment, the inner surface 60 of the tire 1, or of the innerliner 61 respectively, carries radially below the tread portion 10 and/or the belt plies 64, 65 a sensor container 20 which partially encloses and/or carries a sensor 21. Such a sensor 21 could, e.g., be or comprise a tire pressure sensor. The sensor container 20 is preferably made of a rubber composition which is attached to or adhered to the innerliner 61 via its attachment surface by an adhesive, such as a cyano-acrylate adhesive. The sensor container 20 and the sensor 21 may be considered together as a sensor container assembly.

The radial direction r, the circumferential direction c and the axial direction a are indicated in Figure 1 for the sake of better comprehensibility. The axial direction is in parallel with the axis of rotation of the tire. The circumferential direction c is in parallel to the circumference of the tire and perpendicular to the axial direction a. The radial direction r is also perpendicular to the axial direction and the circumferential direction. It is emphasized that a reference to one of these directions does not necessarily limit those to a certain orientation, unless indicated otherwise herein.

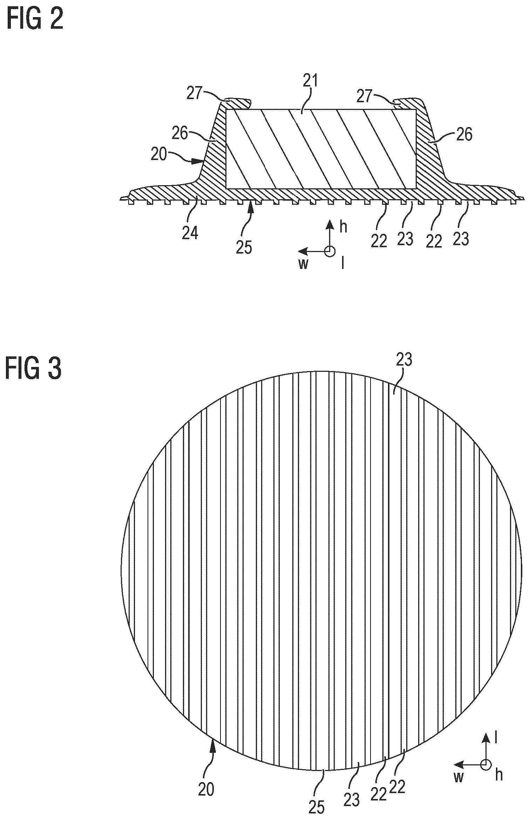

A magnified cross-section of the sensor container 20 and the sensor 21 is schematically shown in Figure 2 in further detail. The sensor 21 is at least partially enclosed and/or carried by the sensor container 20. The sensor container 20 has a bottom portion 24, an essentially hollow cylindrical or frustoconical sensor holding portion 26, and a circular flange portion 27 to hold the sensor 21 (which may, e.g., have an essentially cylindrical shape) in the sensor container 20. The bottom portion 24 further comprises an attachment surface 25 (on a side opposite to and/or facing away from the sensor 21) for attaching the sensor container 20 to the inner surface of a pneumatic tire (i.e., within the tire cavity). The attachment surface 25 of the sensor container 20 is schematically shown with elevations, herein ribs 22, which protrude out of the surface to be attached to the inner surface of the tire 1. The depicted elevations, here in the form of ribs 22, have an essentially rectangular cross-section perpendicular to their length / elongation. The width of these ribs 22 extends in the direction w, their elongated length in direction I, and their height extends in the indicated direction h, which is perpendicular to the plane of the attachment surface 25. Spaces provided laterally between the ribs 22 are shown herein by reference numeral 23. It is noted that the number, size and distance of ribs 22 is rather schematically indicated in Figure 2. Typically, a width of such ribs is within a range of 30 µm to 800 µm, such as in one example 100 µm. Neighboring ribs may, e.g., have a distance within a range of 30 µm to 800 µm, such as 400 µm in one example. The height of ribs can be within a range of 30 µm to 500 µm, such as 70 µm in a preferred example. In case of posts, those may, e.g., have widths and lengths in a similar order, such as within a range of 30 µm to 800 µm.

Figure 3 shows a planar view of the same sensor container 20 as already shown in Figure 2. In particular, the bottom of the sensor container 20 is shown, or in other words, its attachment surface 25, having a plurality of the ribs 22 and spaces 23 (or in other words channels) between such neighboring ribs 22. In this case, the attachment surface 25 of the sensor container 20 has a circular cross-section. Other shapes would be possible. However, curved shapes are preferred (e.g., curved attachment surfaces) as those reduce the risk of detachment at corners. The (maximum) diameter of a sensor container is preferably less than 60 mm. In a preferred embodiment, the attachment surface 25 has a diameter of 42 mm, or a diameter within the range of 40 mm to 45 mm.

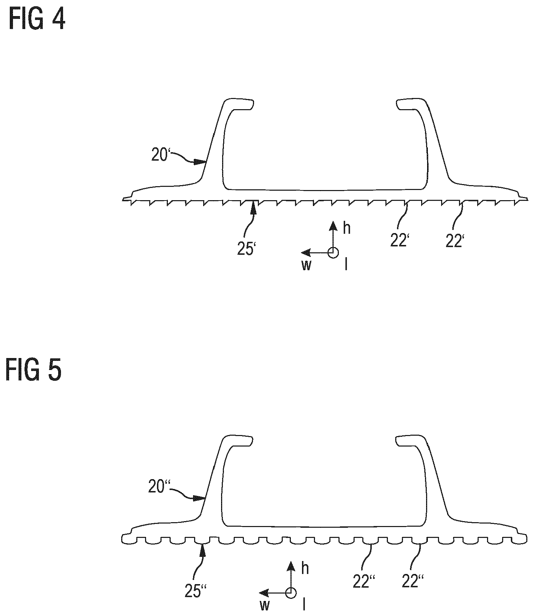

Figure 4 shows another schematic cross-section of a sensor container 20', in accordance with another embodiment of the present invention. In particular, the sensor container 20' comprises an attachment surface 25' having prism-shaped ribs 22'. The ribs 22' have an elongated shape extending in the direction I.

Figure 5 depicts yet another sensor container 22" in accordance with yet another embodiment of the present invention, which comprises a plurality of circular posts 22" protruding out of the attachment surface 25". The posts 22" have at their distal end (facing the inner surface) a curved shape. In another example, it could essentially be a hemispherical shape. In the depicted embodiment, the attachment surface 25" does not comprise ribs but a plurality of circular post, e.g., being regularly distributed over the attachment surface 25" in directions w and I.

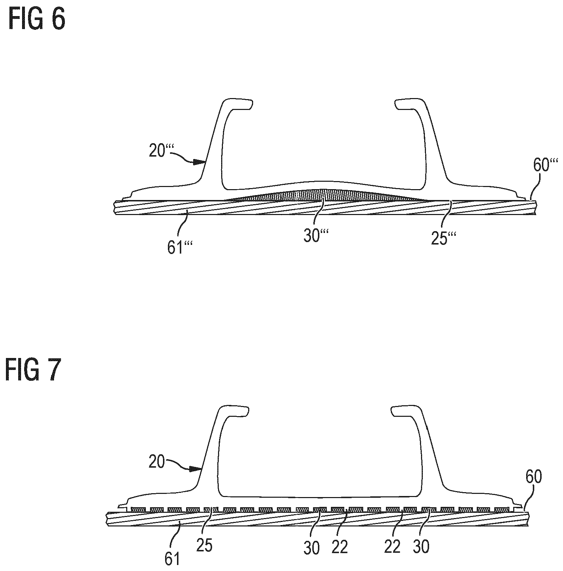

Figures 6 and 7 compare a sensor container without elevations in accordance with the present invention (i.e., as shown in Figure 6) and a sensor container with elevations in accordance with an embodiment of the present invention (i.e., as shown in Figure 7). With respect to Figure 6, sensor container 20‴ (not in accordance with the present invention), is attached via the adhesive 30‴ applied to its attachment surface 25‴ to an innerliner‴ 61. The lateral distribution of the adhesive 30‴ is irregular along the surface. While a center area of the attachment surface 25‴ has a relatively large thickness of adhesive material, laterally outer edges of the attachment surface 25‴ have almost no or no adhesive. Such an exemplary uneven distribution of adhesive impairs an optimum bonding of the container 20‴ to the innerliner 61‴. Moreover, a too thick adhesive zone such as in a center portion of the attachment surface 25" may result in a volume of brittle adhesive which further impairs durability. For instance, the depicted distribution of adhesive may appear if a sensor is already mounted to the container during its attachment, wherein physical pressure onto a sensor is to be avoided so that a circumferential bottom portion of the container 20‴ is pushed onto the inner surface 60‴ of the innerliner 61"'.

In contrast to the situation shown in Figure 6, the attachment situation shown in Figure 7, which is in accordance with an embodiment of the present invention and shows the sensor container 20 already shown in Figures 1, 2, and 3, is considerably improved. In particular, the elevations 22 (here in the form of ribs 22) allow a regular and/or controlled distribution of the adhesive 30 on the attachment surface 25. Excess adhesive can flow along and between neighboring elevations or ribs 22 and be discharged. The total contact area for the adhesive at the interface is increased. Moreover, too thick adhesive layers can be avoided more easily. The bond to the inner surface 60 of the innerliner 61 is improved.

The inventors have also carried out comparative tests with sensor containers as shown in Figure 6 and in Figure 7, i.e., mounted to an innerliner radially below the tread below the centerline of the tread. The corresponding tires were run in high-speed tests with velocities between 250 km/h and 300 km/h. In these tests, it has been observed that a container having a patterned, particularly ribbed, surface as shown in Figure 7 provided good adhesion until more than 300 km/h, whereas the comparative example without elevations on its surface adhered only until 290 km/h.

Sensor containers have been mentioned herein as preferred examples of components attached to an inner surface of the tire. It is emphasized that other components could be attached as well.

In summary, the present invention and/or its embodiments, provide an advanced way of reliably and/or durably attaching components, such as sensor containers or sensors, to an inner surface of a tire. The thickness of an adhesive layer between the inner surface and the attached component can be better controlled. In particular, too thick adhesive portions can be reduced and an even distribution of adhesive material is facilitated. Furthermore, a minimum thickness of adhesive can be provided along the attachment surface more easily, and the contact surface between the inner surface and the container is increased. The same applies to the bonding strength between the inner surface of the tire and the attachment surface.

## Claims

1. A tire having an inner surface (60) comprising an elastomer composition and at least partially enclosing a tire cavity, wherein the tire (1) further comprises a component (20) having an attachment surface (25) comprising a polymer composition, which is attached to a portion of the inner surface (60) via an adhesive, wherein the attachment surface (25) comprises a surface pattern comprising elevations (22) having a height within a range of from 20 µm to 1000 µm, a majority of said elevations (22) being ribs extending in parallel to one another and having a width within a range of 30 µm to 800 µm and neighboring ribs (22) having a distance within a range of 30 µm to 800 µm.

2. The tire according to claim 1, wherein the portion of the inner surface (60) comprises another surface pattern comprising one or more of posts, ribs, cones, and pyramids.

3. The tire according to claim 1 or 2, wherein a space (23) between neighboring elevations (22) is at least predominantly filled with the adhesive; and/or wherein the surface pattern is open along at least one direction in parallel to the attachment surface (25).

4. The tire according to at least one of the previous claims, wherein the tire (1) comprises an innerliner (61) and wherein the portion of the inner surface (60) is a portion of a surface of the innerliner (61).

5. The tire according to at least one of the previous claims, wherein said component (20) is one or more of a sensor (21); a container; a container comprising a sensor; comprising an elastomer composition; comprising a sulfur-cured rubber composition; and a container (20) comprising the attachment surface (25) having a maximum diameter within a range of 10 mm to 60 mm.

6. A sensor container assembly for a tire (1) comprising a sensor container (20) having an attachment surface (25) comprising an elastomer composition, wherein the attachment surface (25) comprises a surface pattern comprising a plurality of elevations (22) having a height within a range of 20 µm to 1000 µm, a majority of said elevations (22) being ribs extending in parallel to one another and having a width within a range of 30 µm to 800 µm and neighboring ribs having a distance within a range of 30 µm to 800 µm; and a tire pressure sensor (21) carried by the sensor container (20).

7. A method of attaching a sensor container (20) to a portion of an inner surface (60) of a tire (1), the method comprising the steps of: providing a tire (1) comprising an inner surface (60) partially enclosing a tire cavity; providing a sensor container (20) in accordance with claim 6; applying an adhesive onto one or more of the attachment surface (25) and the portion of the inner surface (60); and attaching the sensor container (20) with its attachment surface (25) onto the portion of the inner surface (60).

8. The method according to claim 7, wherein the step of providing a tire (1) comprises providing a cured tire.

9. The method according to claim 7 or 8, wherein the step of providing the sensor container (20) having the attachment surface (25) further comprises forming the surface pattern on the attachment surface (25) by one or more of molding, additive manufacturing, and subtractive manufacturing, so as to obtain the surface pattern formed on the attachment surface (25).

10. The method according to at least one of the previous claims 7 to 9, wherein the surface pattern is formed when molding the sensor container (20).

11. The method according to at least one of the previous claims 7 to 10, wherein the surface pattern is formed by subtractive manufacturing and/or wherein the surface pattern is formed by laser ablation.

12. The method according to at least one of the previous claims 7 to 11, wherein the method further comprises the step of laser cleaning one or more of the attachment surface (25) and the portion of the inner surface (60) before attaching the sensor container (20).

13. The method according to at least one of the previous claims 7 to 12, wherein the method further comprises the step of mounting a sensor (21) in the sensor container (20), and wherein the sensor container (20) is attached with the attachment surface (25) onto the portion of the inner surface (60) together with the sensor (21) mounted in the sensor container (20).

## Patentansprüche

1. Reifen, der eine innere Oberfläche (60) aufweist, die eine elastomere Zusammensetzung umfasst und mindestens teilweise einen Reifenhohlraum umschließt; wobei der Reifen (1) ferner eine Komponente (20) umfasst, die eine Befestigungsoberfläche (25) aufweist, die eine polymere Zusammensetzung umfasst, die an einem Abschnitt der inneren Oberfläche (60) über einen Klebstoff befestigt ist; wobei die Befestigungsoberfläche (25) ein Oberflächenmuster umfasst, das Erhebungen (22) aufweist, die eine Höhe aufweisen, die in einem Bereich von 20 µm bis 1000 µm liegt; wobei ein größerer Teil der Erhebungen (22) Rippen umfasst, die sich parallel zueinander erstrecken und eine Breite aufweisen, die in einem Bereich von 30 µm bis 800 µm liegt, und benachbarte Rippen (22) einen Abstand aufweisen, der in einem Bereich von 30 µm bis 800 µm liegt.

2. Reifen nach Anspruch 1, wobei der Abschnitt der inneren Oberfläche (60) ein weiteres Oberflächenmuster umfasst, das ein oder mehrere Elemente umfasst, die aus Säulen, Rippen, Kegeln und Pyramiden ausgewählt sind.

3. Reifen nach Anspruch 1 oder 2, wobei ein Zwischenraum (23) zwischen benachbarten Erhebungen (22) zumindest teilweise mit dem Klebstoff gefüllt ist; und/oder wobei das Oberflächenmuster entlang mindestens einer Richtung offen ist, die sich parallel zu der Befestigungsoberfläche (25) erstreckt.

4. Reifen nach mindestens einem der vorhergehenden Ansprüche, wobei der Reifen (1) eine Innenschicht (61) umfasst; und wobei der Abschnitt der inneren Oberfläche (60) ein Abschnitt einer Oberfläche der Innenschicht (61) ist.

5. Reifen nach mindestens einem der vorhergehenden Ansprüche, wobei die Komponente (20) ein oder mehrere Elemente darstellt, die ausgewählt sind aus: einem Sensor (21); einem Behälter; einem Behälter, der einen Sensor umfasst; einem Behälter, der eine elastomere Zusammensetzung umfasst; einem Behälter, der eine Kautschukzusammensetzung umfasst, die mit Schwefel vulkanisiert ist; und einem Behälter (20), der die Befestigungsoberfläche (25) umfasst, die einen maximalen Durchmesser aufweist, der in dem Bereich von 10 mm bis 60 mm liegt.

6. Baugruppe in Form eines Sensorbehälters für einen Reifen (1), der einen Sensorbehälter (20) umfasst, der eine Befestigungsoberfläche (25) aufweist, die eine elastomere Zusammensetzung umfasst; wobei die Befestigungsoberfläche ein Oberflächenmuster umfasst, das Erhebungen (22) aufweist, die eine Höhe aufweisen, die in einem Bereich von 20 µm bis 1000 µm liegt; wobei ein größerer Teil der Erhebungen (22) Rippen umfasst, die sich parallel zueinander erstrecken und eine Breite aufweisen, die in einem Bereich von 30 µm bis 800 µm liegt, und benachbarte Rippen (22) einen Abstand aufweisen, der in einem Bereich von 30 µm bis 800 µm liegt; und einen Sensor (21) für den Druck des Reifens, der von dem Sensorbehälter (20) gestützt wird.

7. Verfahren zum Befestigen eines Sensorbehälters (20) an einem Abschnitt einer inneren Oberfläche (60) eines Reifens (1); wobei das Verfahren die folgenden Schritte umfasst: das Bereitstellen eines Reifens, der eine innere Oberfläche (60) umfasst, die einen Reifenhohlraum teilweise umschließt; das Bereitstellen eines Sensorbehälters (20) gemäß Anspruch 6; das Aufbringen eines Klebstoffs auf ein oder mehrere Elemente, die aus der Befestigungsoberfläche (25) und dem Abschnitt der inneren Oberfläche (60) ausgewählt sind; und das Befestigen des Sensorbehälters (20) mit seiner Befestigungsoberfläche (25) an dem Abschnitt der inneren Oberfläche (60).

8. Verfahren nach Anspruch 7, wobei der Schritt des Bereitstellens eines Reifens (1) das Folgende umfasst: das Bereitstellen eines vulkanisierten Reifens.

9. Verfahren nach Anspruch 7 oder 8, wobei der Schritt des Bereitstellens des Sensorbehälters (20), der die Befestigungsfläche (25) aufweist, ferner das Folgende umfasst: das Bilden des Oberflächenmusters auf der Befestigungsfläche (25) durch ein oder mehrere Verfahren, ausgewählt aus Gießen, additiver Fertigung und subtraktiver Fertigung, derart, dass das auf der Befestigungsfläche (25) gebildete Oberflächenmuster erzielt wird.

10. Verfahren nach mindestens einem der vorhergehenden Ansprüche 7 bis 9, wobei das Oberflächenmuster während des Formens des Sensorbehälters (20) erzielt wird.

11. Verfahren nach mindestens einem der vorhergehenden Ansprüche 7 bis 10, wobei das Oberflächenmuster durch eine subtraktive Herstellung erzielt wird und/oder wobei das Oberflächenmuster durch eine Laserablation erzielt wird.

12. Verfahren nach mindestens einem der vorhergehenden Ansprüche 7 bis 11, wobei das Verfahren den Schritt umfasst, bei dem ein oder mehrere Elemente, die aus der Befestigungsoberfläche (25) und dem Abschnitt der inneren Oberfläche (60) ausgewählt sind, vor dem Befestigen des Sensorbehälters (20) mit einem Laser geätzt werden.

13. Verfahren nach mindestens einem der vorhergehenden Ansprüche 7 bis 12, wobei das Verfahren den Schritt umfasst, dass ein Sensor (21) in dem Sensorbehälter (20) angebracht wird; und wobei der Sensorbehälter (20) an der Befestigungsfläche (25) an dem Abschnitt der inneren Oberfläche (60) **in** Verbindung mit der inneren Oberfläche (60), die **in** dem Sensorbehälter (20) angebracht wurde, befestigt wird.

## Revendications

1. Bandage qui possède une surface interne (60) qui comprend une composition élastomère et qui renferme, au moins de manière partielle, une cavité de bandage ; dans lequel le bandage (1) comprend en outre un composant (20) qui possède une surface de fixation (25) qui comprend une composition polymère, qui est fixée à une portion de la surface interne (60) par l'intermédiaire d'un adhésif ; dans lequel la surface de fixation (25) comprend un motif superficiel qui comprend des élévations (22) qui possèdent une hauteur qui se situe au sein d'une plage allant de 20 µm à 1000 µm ; dans lequel une majeure partie desdites élévations (22) représentent des nervures qui s'étendent parallèlement les unes aux autres et qui possèdent une largeur qui se situe au sein d'une plage allant de 30 µm à 800 µm et des nervures voisines (22) se trouvent une distance qui se situe au sein d'une plage allant de 30 µm à 800 µm.

2. Bandage selon la revendication 1, dans lequel la portion de la surface interne (60) comprend un autre motif superficiel qui comprend un ou plusieurs éléments qui sont choisis parmi des colonnes, des nervures, des cônes et des pyramides.

3. Bandage selon la revendication 1 ou 2, dans lequel un espace (23) ménagé entre des élévations voisines (22) est rempli au moins en grande partie avec l'adhésif ; et/ou dans lequel le motif superficiel est ouvert le long d'au moins une direction qui est parallèle à la surface de fixation (25).

4. Bandage selon au moins une des revendications précédentes, dans lequel le bandage (1) comprend un calandrage intérieur (61) ; et dans lequel la portion de la surface interne (60) est une portion d'une surface du calandrage intérieur (61).

5. Bandage selon au moins une des revendications précédentes, dans lequel ledit composant (20) représente un ou plusieurs éléments qui sont choisis parmi : un capteur (21) ; un récipient ; un récipient qui comprend un capteur ; un récipient qui comprend une composition élastomère ; un récipient qui comprend une composition de caoutchouc vulcanisée au soufre ; et un récipient (20) qui comprend la surface de fixation (25) qui présente un diamètre maximal qui se situe dans une plage allant de 10 mm à 60 mm.

6. Assemblage sous la forme d'un récipient de capteur, destiné à un bandage (1), qui comprend un récipient de capteur (20) qui possède une surface de fixation (25) qui comprend une composition élastomère ; dans lequel la surface de fixation (25) comprend un motif superficiel qui comprend un certain nombre d'élévations (22) qui possèdent une hauteur qui se situe au sein d'une plage allant de 20 µm à 1000 µm ; dans lequel une majeur partie desdites élévations (22) représente des nervures qui s'étendent parallèlement les unes aux autres et qui possèdent une largeur qui se situe au sein d'une plage allant de 30 µm à 800 µm et des nervures voisines se trouvent à une distance qui se situe au sein d'une plage allant de 30 µm à 800 µm ; et un capteur (21) de la pression du bandage, supporté par le récipient de capteur (20).

7. Procédé de fixation d'un récipient de capteur (20) à une portion d'une surface interne (60) d'un bandage (1) ; dans lequel le procédé comprend les étapes au cours desquelles : on procure un bandage (1) qui comprend une surface interne (60) qui renferme de manière partielle une cavité de bandage ; on procure un récipient de capteur (20) en conformité avec la revendication 6 ; on applique un adhésif sur un ou plusieurs éléments qui sont choisis parmi la surface de fixation (25) et la portion de la surface interne (60) ; et on fixe le récipient de capteur (20) avec sa surface de fixation (25) sur la portion de la surface interne (60).

8. Procédé selon la revendication 7, dans lequel l'étape au cours de laquelle on procure un bandage (1) comprend le fait de procurer un bandage vulcanisé.

9. Procédé selon la revendication 7 ou 8, dans lequel l'étape au cours de laquelle on procure le récipient de capteur (20) qui possède la surface de fixation (25) comprend en outre le fait de former le motif superficiel sur la surface de fixation (25) par l'intermédiaire d'un ou de plusieurs procédés qui sont choisis parmi un moulage, une fabrication additive, et une fabrication soustractive, d'une manière telle que l'on obtient le motif superficiel formé sur la surface de fixation (25).

10. Procédé selon au moins une des revendications précédentes 7 à 9, dans lequel on obtient le motif superficiel au cours du moulage du récipient de capteur (20).

11. Procédé selon au moins une des revendications précédentes 7 à 10, dans lequel on obtient le motif superficiel par l'intermédiaire d'une fabrication soustractive et/ou dans lequel on obtient le motif superficiel par l'intermédiaire d'une ablation au laser.

12. Procédé selon au moins une des revendications précédentes 7 à 11, dans lequel le procédé comprend en outre l'étape au cours de laquelle on procède au décapage au laser d'un ou de plusieurs éléments qui sont choisis parmi la surface de fixation (25) et la portion de la surface interne (60) avant de fixer le récipient de capteur (20).

13. Procédé selon au moins une des revendications précédentes 7 à 12, dans lequel le procédé comprend en outre l'étape au cours de laquelle on procède au montage d'un capteur (21) dans le récipient de capteur (20) ; et dans lequel le récipient de capteur (20) est fixé avec la surface de fixation (25) sur la portion de la surface interne (60) de manière conjointe avec le capteur (21) qui a été monté dans le récipient de capteur (20).
